# EUROPEAN PATENT APPLICATION

(11) **EP 1 355 490 A2**
(43) Date of publication of application: **22.10.2003**
(21) Application number: 03252035.5
(22) Date of filing: 31.03.2003
(51) Int. Cl.: H04N 5/765

(54) **Multifunction video apparatus**

(30) Priority: 15.04.2002 KR 2002020309
(71) Applicant: Samsung Electronics Co., Ltd., Suwon City, Kyungki-do (KR)
(72) Inventor: Kang, Eun-jung, 2-dong, Changan-gu, Suwon-c., Gyunggi-do (KR)
(74) Representative: Geary, Stuart Lloyd

(57) **Abstract**

A combination system is constructed with a DVD device (200) and a VCR device (300), and the DVD device has an OSD block (220). The OSD block (220) of the DVD device (200) produces an OSD, and the VCR device (300) receives an operation command that a user inputs after looking up the OSD. The VCR device (300) transfers the received operation command to the DVD device (200). The DVD device (200) interprets the transferred operation command, performs a corresponding operation if the operation command is related to the DVD device (200), and transfers the operation command to the VCR device (300) for a corresponding operation if the operation command is related to the VCR device (300). Accordingly, a user can conveniently manipulate the DVD device and the VCR device by using a single OSD.

## Description

The present invention relates to a multifunction video apparatus comprising user input means and first and second video sub-systems providing video signals from respective sources, the first subsystem including an on-screen display means for generating a control menu video signal for output by the first video subsystem and a controller.

A multifunction video apparatus combining two or more different electronic devices is sometimes known as a "combination system", a "combo-system" or a "combo". For example, a DVDP/VCR combo-system exists that is both a DVD player and VCR.

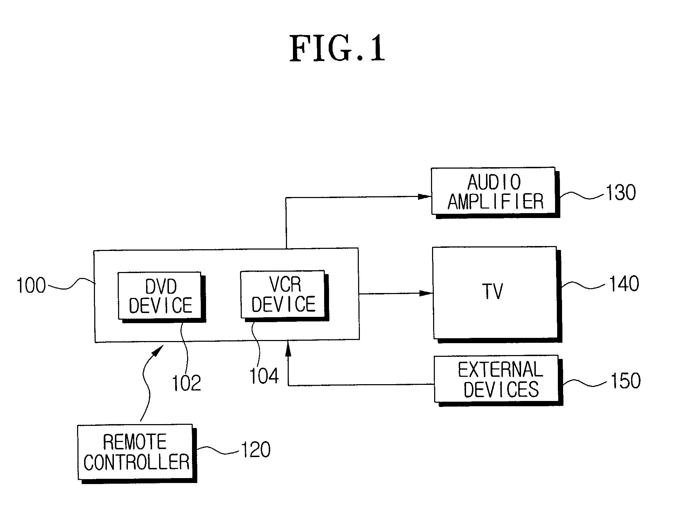

Figure 1 is a schematic block diagram showing such an exemplary conventional DVDP/VCR combo-system and peripheral devices coupled thereto.

Referring to Figure 1, the DVDP/VCR combo-system 100 is provided with a DVD device 102 for performing basic DVD player functions such as reproducing video and audio signals recorded on a DVD and a VCR device 104 for performing basic VCR functions such as reproducing video and audio signals recorded on a magnetic tape and recording a signal from an external source onto magnetic tape.

A TV set 140 or the like can be coupled to the DVDP/VCR combo-system 100 for making the video and audio signals, reproduced by the DVD device 102 or the VCR device 104, perceivable. An audio amplifier 130 or the like can also be coupled to the DVDP/VCR combo-system 100 making audio signals, reproduced by the DVD device 102, pervceivable. Other external devices 150 such as camcorders or the like can be coupled to the DVDP/VCR combo-system 100. The DVDP/VCR combo-system 100 can receive and record video and audio from such external devices 150.

The DVD device 102 and the VCR device 104 in the DVDP/VCR combo-system 100 have the appearance of being integrated. A user can manipulate a separate input device such as a remote controller 120 or a key input pad (not shown) provided on the front of the DVDP/VCR combo-system 100 to switch between the DVD device 102 and the VCR device 104, as well as control the respective functions of the DVD device 102 and the VCR device 104.

The combination system 100 described above also has an OSD (On-screen Display) block (not shown) for providing a user with a menu through an OSD function. If a user first selects the OSD function for inputting a command by manipulation of the remote controller 120, a list of commands is displayed on the screen of the TV set 140. The user can easily select operations from this list. Such an operation command list contains commands for the environments of the DVD device 102 or the VCR device 104 (e.g., commands such as a setting command for selecting a language to be captioned onscreen).

However, the conventional combination system 100 has separate OSD functions for the DVD device 102 and the VCR device 104, which a user may find inconvenient and which may cause confusion. In other words, since the OSD function for the DVD device 102 and the OSD function for the VCR device 104 exist separately, a user has to use the OSD provided by the VCR device 104 to control the operations of the VCR device 104 and the OSD provided by the DVD device 102 to control the operations of the DVD device 102. Therefore, in order to control the operation of the VCR device 104 or change the environment settings of the VCR device 104, a user has to first switch the operational mode of the combination system 100 from the DVD mode to the VCR mode and vice versa.

Accordingly, when a user wants to input operational or environmental settings which apply equally to the DVD device 102 and the VCR device 104, such as the input of a command to perform reproduction, setting a language to be used when reproduced, or the like, the user is prone to making mistakes when inputting operational commands due to inadvertently overlooking the current operation mode.

Furthermore, the OSD function for the DVD device 102 and the OSD function for the VCR device 104 are configured in a non-harmonious fashion, rather than in a consistent fashion, with respect to each other, causing a problem that may lower the grade of the products.

An apparatus according to the present invention is characterised by communication means for communicating control signals between said subsystems and the controller being responsive to a user input signal from the user input means to control the first subsystem or transmit a control signal to the second subsystem in dependence on the video output of the on-screen display means.

Preferably, the user input means is configured to input signals into the second subsystem and the second subsystem is configured for selectively communicating signals from the user input means to the first subsystem using the communications means.

Preferably, the first subsystem comprises a DVD deck and/or the second subsystem comprises a VCR deck.

Preferably, the second subsystem includes a video and audio routing means for receiving the video and audio output signals of the first and second subsystems and outputting the output signals of one or other of the subsystems in dependence on a user input signal from the user input means.

An embodiment of the present application will now be described, by way of example, with reference to Figures 2 to 5 of the accompanying drawings, in which:
Figure 1 is a schematic block diagram for showing a conventional DVDP/VCR combination system;
Figure 2 is a schematic block diagram for showing a DVDP/VCR combination system according to the present invention;
Figure 3 is a flowchart showing the operation control process carried out in the combination system shown in Figure 2;
Figure 4 shows a menu display provided by an OSD device in the combination system shown in Figure 2; and
Figure 5 shows the menu display of Figure 4 in another state.

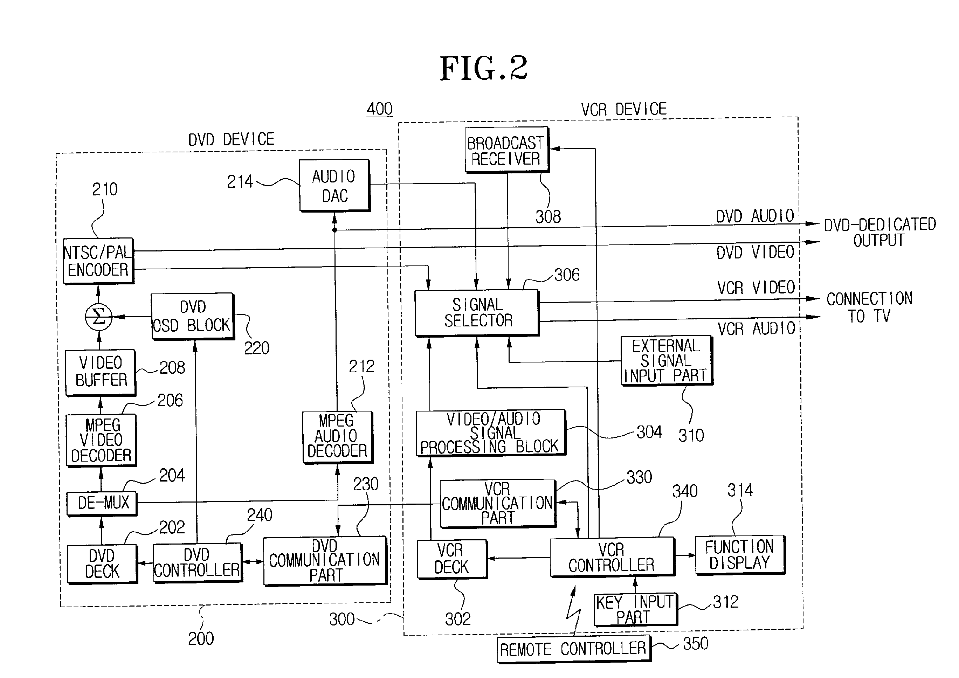

Referring to Figure 2, the DVDP/VCR combo-system 400 has a DVD device 200 performing the functions of a DVD player and a VCR device 300 performing the functions of a VCR.

The DVD device 200 comprises a DVD deck 202, a demultiplexer 204, an MPEG video decoder 206, a video buffer 208, an NTSC/PAL encoder 210, an MPEG audio decoder 212, an audio DAC 214, a DVD OSD block 220, a DVD controller 240 and a DVD communication part 230.

The DVD deck 202 reads data recorded on DVDs. The demultiplexer 204 splits the data read in from the DVD deck 202 into a moving picture experts group (MPEG) video signal and an MPEG audio signal and outputs the signals to the MPEG video decoder 206 and the MPEG audio decoder 212 respectively. The MPEG video decoder 206 decodes the MPEG-encoded video signal and the MPEG audio decoder 212 decodes the MPEG-encoded audio signal. The video buffer 208 temporarily stores the decoded video signal.

The NTSC/PAL encoder 210 receives data from the video buffer 208 and the DVD OSD block 220 and outputs the video signal in the NTSC (National Television System Committee) or PAL (Phase Alternation Line) format.

The audio DAC 214 receives data from the MPEG audio decoder 212 and outputs audio data. The video signal from the NTSC/PAL encoder 210 and the audio signal from the audio DAC 214 are provided as dedicated DVD output signals.

The DVD OSD block 220 generates an on-screen display which is in addition to the display reproduced by the DVD device 200. The DVD controller 240 controls the overall operation of the individual components in the DVD device 200. The DVD communication part 230 is used for communications between the DVD device 200 and the VCR device 300.

The VCR device 300 comprises a VCR deck 302, a video/audio signal processing block 304, a signal selector 306, a broadcast receiver 308, an external signal input part 310, a key input part 312, a FUNCTION display 314, a VCR communication part 330 and a VCR controller 340.

The VCR deck 302 records signals on magnetic tapes and reproduces signals recorded on magnetic tapes, and the video/audio signal processing block 304 receives and transfers the video and audio signals to be recorded or having been reproduced using the VCR deck 302.

The signal selector 306 receives as inputs the following: the output of the NTSC/PAL encoder 210, the output of the audio DAC 214, the output of the video/audio signal processing block 304, signals from the broadcast receiver 308 and the external signal input part 310. The signal selector 306 selects, from these input signals, a signal to be transferred to a TV set, based on the controls of the VCR controller 340. The selected signal is then provided as the VCR video and audio signals.

The broadcast receiver 308 tunes to broadcast TV channels to receive desired broadcasts. The external signal input part 310 transfers signals input from an external device to the signal selector 306. Signal output ports of an external device are connected to the external signal input part 310. Accordingly, a signal can be transferred to the combo-system 400 through the external signal input part 306 from the external device and recorded on a magnetic tape by the VCR device 300 and/or reproduced through the TV set.

The VCR device 300 has a FUNCTION display 314 for displaying information such as operation states, operation modes, and the like to users. The VCR device 300 also has a key input part 312 for inputting various commands from a user. The VCR controller 340 can input diverse operation commands from a user through the key input part 312 and a remote controller 350. Thus, the VCR controller 340 operates as an input controller, as well as controlling the overall operation of the components of the VCR device 300.

The VCR controller 340 and the DVD controller 240 are connected to each other through the VCR communication part 330 and the DVD communication part 230 exchanging commands. Therefore, a command input into the VCR controller 340 can be transferred to the DVD controller 240 and the DVD controller 240 can also transfer commands to the VCR controller 340.

As above, the controller of the DVDP/VCR combo-system 400 comprises the VCR controller 340, the VCR communication part 330, the DVD controller 240 and the DVD communication part 330, of which the VCR communication part 330 and the DVD communication part 230 together provide a communication part for enabling communications between the VCR device 300 and the DVD device 200.

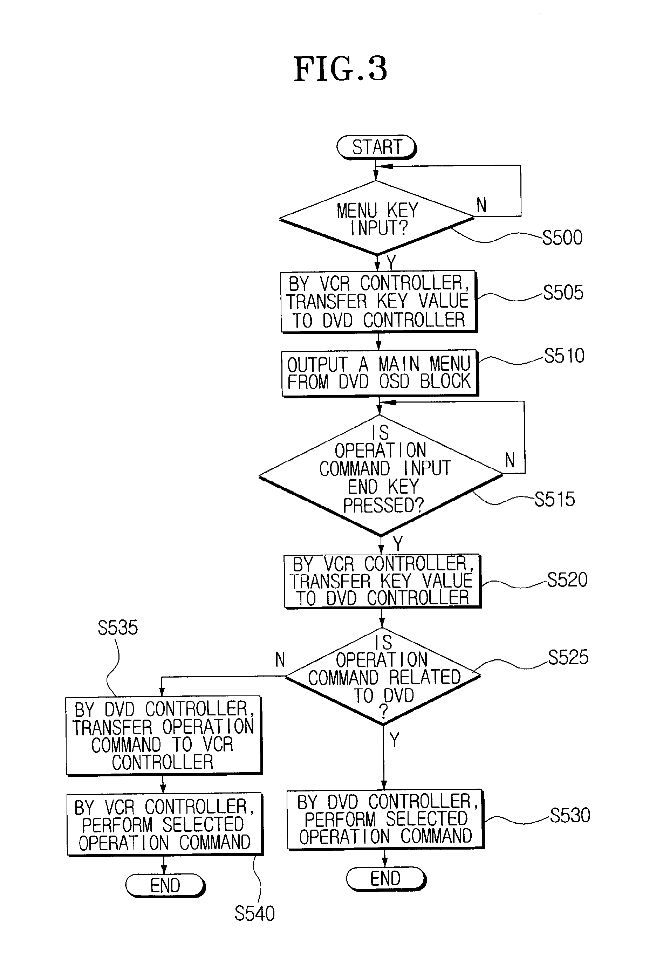

Referring to Figure 3, when a user presses a menu key on the remote controller 350 or the key input part 312 to choose the main menu (S500), the VCR controller 340 operates as an input controller to receive a key value. The VCR controller 340 transfers the received key value to the VCR communication part 330 and the DVD controller 240 through the DVD communication part (S505).

The DVD controller 230 interprets the received key value and, accordingly, sends a command for outputting an OSD screen to the DVD OSD block 220. The DVD OSD block 220, having received the command, outputs a main menu of an OSD (S510). Thus, the DVD controller 230 operates as a command controller interpreting the input key value and commanding the DVD OSD block 220 to output the OSD screen. For example, the main OSD menu is displayed on the screen of the TV set connected to the DVDP/VCR combo-system 400.

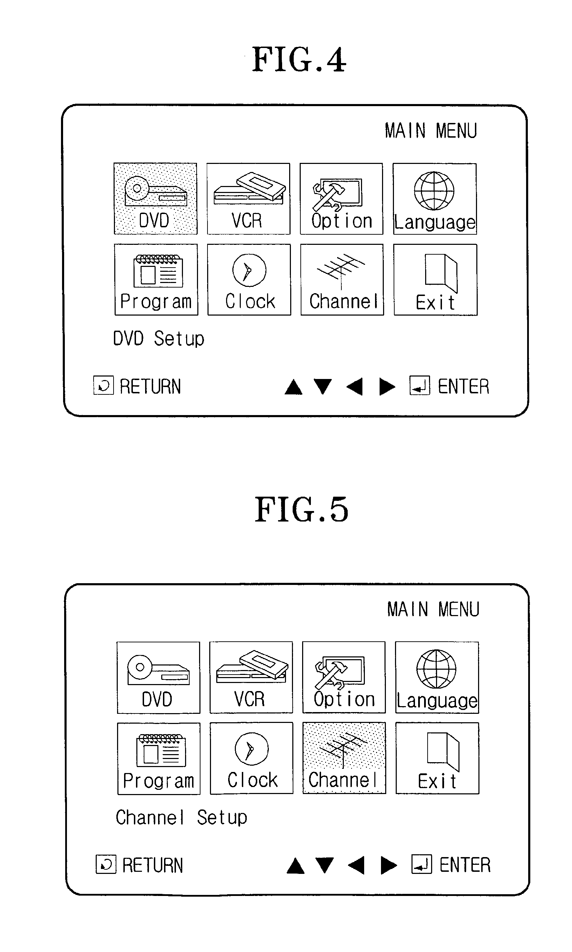

Referring to Figure 4, the main menu of the OSD comprises such items as 'DVD', 'VCR', 'Option', 'Language', 'Programme', 'Clock', 'Channel' and 'Exit'. A user can use the remote controller 350 or the key input part 312 to choose one of the items. Figure 4 shows the selection of the item 'DVD' from the main menu of OSD display and Figure 5 shows the selection of the item 'Channel'.

Even though not shown, a sub-menu can be associated with each item. For example, the 'DVD' item can have a sub-menu for environment settings of the DVD device 200. For example, if a user selects the item 'DVD', a sub-menu is displayed for the environment settings of the DVD device 200, which include items such as 'TV Aspect Ratio', 'Language', 'Still Mode', 'Black Level', 'Alt Video Out', and so on. Likewise, the item 'Clock' can have a sub-menu display including items such as 'Auto Clock Set' for automatic time settings, 'Manual Clock Set' for manual time settings, and so on. The item 'Language' for language settings can have a sub-menu display including items such as 'English', 'French', 'Spanish', and the like, for selecting language to be used on the OSD.

As described above, a user sequentially proceeds with selections from the items provided on the main menu display and one or more sub-menu displays so that he or she can choose a desired operation command via the OSD.

If a user makes an operation command choice using a main menu display and a sub-menu display and pressing a key, such as the enter key or the like (S520), the VCR controller 340 recognizes the key press and transfers a received key value to the DVD controller 240 (S525).

The DVD controller 240 interprets the input key value and decides what the corresponding operation command is. If the input operation command is an operation command related to the DVD as a result of the decision (S525), the DVD controller 240 performs an operation based on the corresponding operation command (S530).

If the input operation command is not an operation command related to the DVD, the DVD controller 240 transfers the operation command to the VCR controller 340 through the DVD communication part 230 and the VCR communication part 330 (S535). The VCR controller 340, in turn, carries out the received operation command (S540). By such a process as described above, a user can control the DVD device 200 and the VCR device 300 by using one main OSD.

In the above embodiment, the VCR controller 340 receives and transfers to the DVD controller 240 an operation command that a user inputs with reference to the OSD display, and the DVD controller 240 interprets the transferred command and controls the DVD OSD block 220. This is because the VCR controller 340 is used as a main controller in a combination system into which a DVD player and a VCR are combined, but the OSD block in the DVD player has a higher quality and more diverse functions, so that it is preferable for the DVD controller 240 to control the OSD display.

However, it is possible to construct a different embodiment from the above by arbitrarily selecting a device for receiving an operation command that a user inputs with the look-up of the OSD or a device for interpreting the operation command and controlling the OSD.

With the present invention, it is possible that a list of operation commands used in plural devices through one OSD is displayed and an internal controller transfers to a corresponding device an operation command that a user inputs with the look-up of the OSD in order for the corresponding device to perform the operation command. Accordingly, a user can conveniently manipulate respective devices in a combination system with a single OSD.

Furthermore, although a preferred embodiment of the present invention has been described, it will be understood by those skilled in the art that the present invention should not be limited to the described preferred embodiment, but various changes and modifications can be made.

## Claims

1. A multifunction video apparatus comprising user input means (312, 350) and first and second video sub-systems (200, 300) providing video signals from respective sources (202, 302), the first subsystem (200) including an on-screen display means (220) for generating a control menu video signal for output by the first video subsystem (200) and a controller (240), **characterised by** communication means (230, 330) for communicating control signals between said subsystems (200, 300) and the controller (240) being responsive to a user input signal from the user input means (312, 350) to control the first subsystem (200) or transmit a control signal to the second subsystem (300) in dependence on the video output of the on-screen display means (220).

2. An apparatus according to claim 1, wherein the user input means (312, 350) is configured to input signals into the second subsystem (300) and the second subsystem (300) is configured for selectively communicating signals from the user input means (312, 350) to the first subsystem (200) using the communications means (230, 330).

3. An apparatus according to claim 1 or 2, wherein the first subsystem (200) comprises a DVD deck (202).

4. An apparatus according to claim 1, 2 or 3, wherein the second subsystem (300) comprises a VCR deck (302).

5. An apparatus according to any preceding claim, wherein the second subsystem (300) includes a video and audio routing means (306) for receiving the video and audio output signals of the first and second subsystems (200, 300) and outputting the output signals of one or other of the subsystems (200, 300) in dependence on a user input signal from the user input means (312, 350).

6. A control apparatus for use in a combination system having plural devices for performing independent functions in response to operation commands, the control apparatus comprising:
an on-screen display (OSD) module for outputting an OSD that displays a list of operation commands that can be inputted for controlling operations of each of the plural devices; and
a controller for receiving an input from a user input device in response to selection of one of said operation commands, interpreting said input to determine which of said operation commands has been selected via said input, and to which of the plural devices said operation command is to be transferred, and transferring the said operation command to the corresponding one of the plural devices to perform the operation command.

7. A control apparatus as claimed in claim 6, wherein said controller comprises:
an input controller for receiving said input;
a command controller for interpreting said input and transferring the corresponding said operation command to the corresponding one of the plural devices to perform said operation command; and
a communication part for enabling communications between said input controller and said command controller and between said command controller and each of the plural devices.

8. A control apparatus as claimed in claim 7, wherein said user input device is one of a remote control device and a key input device, said input comprising a key value corresponding to one of said operation commands.

9. A control apparatus as claimed in claim 7, wherein said input is a request for a main menu, said command controller being programmable to send a command to said OSD module to generate a main menu screen for display.

10. A control apparatus as claimed in claim 7, wherein the plural devices include a digital video disk or DVD player for reproducing a signal recorded on a DVD, and a video cassette recorder or VCR for recording and reproducing a signal to and from a magnetic tape, said DVD player comprising said OSD module and said command controller, and said VCR comprising said input controller.

11. A control apparatus as claimed in claim 10, wherein said DVD player comprises a DVD communication part and a DVD controller connected to said DVD communication part and said OSD module and said VCR comprises a VCR communication part and a VCR controller connected to said VCR communication part, said command controller being said DVD controller, said input controller being said VCR controller, and said communication part comprising said VCR communication part and said DVD communication part which are each configured to communicate to each other and to transfer said operation commands to each other.

12. A control apparatus as claimed in claim 10, wherein said input is a request for a main menu, said command controller being programmable to send a command to said OSD module to generate a main menu screen for display.

13. A control apparatus as claimed in claim 12, wherein a display device is connected to at least one of said DVD player and said VCR and said OSD module is programmable to send said main menu screen to said display device.

14. A control apparatus as claimed in claim 12, wherein said main menu screen comprises the options of 'DVD' and 'VCR', said OSD module being operable to generate, respectively, a DVD sub-menu and a VCR sub-menu in response to a user selecting a corresponding one of said options of 'DVD' and 'VCR', said DVD sub-menu and said VCR sub-menu each comprising options for controlling said DVD player and said VCR.

15. A control apparatus as claimed in claim 14, wherein said main menu screen comprises at least one additional option selected from the group consisting of 'Option', 'Language', 'Program', 'Clock', 'Channel', and 'Exit'.

16. A control apparatus as claimed in claim 11, wherein said input corresponds to an operation command for one of a DVD player function and a VCR function, said DVD controller being programmable to perform said DVD function if said input corresponds to an operation command for a DVD player function, and to transfer said operation command to said VCR via said communication part if said input corresponds to an operation command for a VCR function.

17. A method for controlling a combination system having plural devices for performing independent functions in response to operation commands, the method comprising the steps of:
generating an OSD to display a list of operation commands that can be inputted for selectively operating each of the plural devices;
receiving an input from a user input device corresponding to one of said operation commands; and
interpreting and transferring said received operation command to a corresponding one of the plural devices to perform said received operation command.

18. A method as claimed in claim 17, wherein the plural devices include a digital video disk or DVD player for reproducing a signal recorded on a DVD, and a video cassette recorder or VCR for recording and reproducing a signal to and from a magnetic tape, said receiving step is performed via said VCR, said generating step and said interpreting step are performed via said DVD player.

19. A method as claimed in claim 18, further comprising the step of transferring said operation commands relating to said VCR from said DVD player to said VCR.

20. A method as claimed in claim 17, wherein the plural devices include a digital video disk or DVD player for reproducing a signal recorded on a DVD, and a video cassette recorder or VCR for recording and reproducing a signal to and from a magnetic tape, and further comprising the step of controlling all of the operations of said VCR and said DVD player through a single said OSD to obviate a user having to change between a DVD operation mode and a VCR operation mode.
